# EUROPÄISCHE PATENTSCHRIFT

(11) **EP 1 745 195 B1**
(45) Veröffentlichungstag und Bekanntmachung des Hinweises auf die Patenterteilung: **03.02.2016**
(21) Anmeldenummer: 05749718.2
(22) Anmeldetag: 04.05.2005
(51) Int. Cl.: F01D 5/18, F02C 7/24

(54) **STRÖMUNGSMASCHINENSCHAUFEL**
NON-POSITIVE-DISPLACEMENT MACHINE BUCKET
AUBE DE TURBOMACHINE

(30) Priorität: 10.05.2004 DE 102004023623
(43) Veröffentlichungstag der Anmeldung: 24.01.2007
(73) Patentinhaber: ALSTOM Technology Ltd, 5400 Baden (CH)
(72) Erfinder: TRISHKIN, Alexandre, Lytkarino, 140061 (RU); VASSILIEV, Vladimir, CH-5300 Turgi (CH); VINOGRADOV, Dimitri, Moskau, 115407 (RU)
(74) Vertreter: General Electric Technology GmbH
(86) Internationale Anmeldenummer: PCT/EP2005/052035
(87) Internationale Veröffentlichungsnummer: WO 2005/108746

(56) Entgegenhaltungen:
- WO-A-03/026886
- US-A- 4 629 397
- US-A- 5 840 434
- US-A- 6 106 231
- US-B1- 6 197 424
- US-B1- 6 224 339
- US-B1- 6 241 469

## Beschreibung

### Technisches Gebiet

Die vorliegende Erfindung betrifft eine Strömungsmaschinenschaufel gemäss dem Oberbegriff des Anspruchs 1. Sie betrifft weiterhin ein Verfahren zur Herstellung einer solchen Strömungsmaschinenschaufel.

### Stand der Technik

In modernen Strömungsmaschinen, insbesondere im Heissgaspfad von Gasturbogruppen, herrschen sehr hohe Temperaturen vor. Dort eingesetzte Komponenten werden daher einerseits gekühlt, und andererseits alternativ oder ergänzend mit Wärmedämmschichten (TBC) versehen. Die Wärmedämmschichten, welche im Allgemeinen aus keramischen Werkstoffen bestehen, vermindern den Wärmeeintrag in die Strömungsmaschinenkomponenten. Um eine bestmögliche Wärmeisolation zu erreichen, werden die heissgasumströmten Komponenten üblicherweise auf ihrer gesamten heissgasumströmten oder heissgasüberströmten Kontur mit der Wärmedämmschicht versehen. Es hat sich jedoch gezeigt, dass neben der reinen thermischen Belastung der Komponenten auch ungleichmässige Temperaturverteilungen auftreten, aus denen thermische Spannungen resultieren, welche der Lebensdauer einer Komponente abträglich sind. Es hat sich weiterhin gezeigt, dass die Wärmedämmschichten einerseits die Reibungsverluste der Umströmung oder Überströmung der Komponente vergrößern; hat sich auch gezeigt, dass aufgrund der von der Wärmedämmschicht verursachten Verdickung einer Schaufelblatthinterkante auch die Hinterkantenverluste an Turbinenschaufeln ansteigen.

Die Druckschrift US-B1-6,224,339 offenbart ein für hohe Temperaturen vorgesehenes Schaufelblatt, bei dem die dem Heissgasstrom ausgesetzten Partien mit einer Mehrzahl von Hitzeschutzkacheln ("flow path cover tiles") bedeckt sind. Diese Hitzeschutzkacheln sind eigenständige, formstabile Körper aus Keramik, intermetallischen Verbindungen oder mit einer Wärmeschutzschicht beschichteten Legierungen.

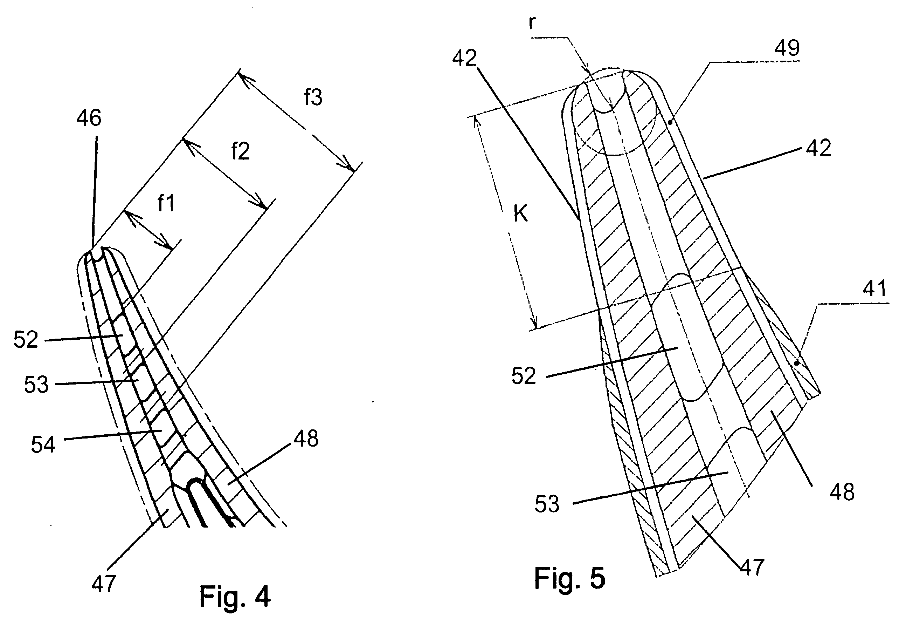

Diese Druckschrift offenbart weiterhin, dass das ganze Schaufelblatt mit den Hitzeschutzkacheln bedeckt sein kann (Fig. 12), dass die Hitzeschutzkacheln aber auch einen Bereich an der Hinterkante unbedeckt lassen können (Fig. 4, Fig. 13). Der von den Hitzeschutzkacheln unbedeckte Bereich an der Hinterkante kann dabei wahlweise mit einer Wärmedämmschicht beschichtet sein, oder nicht. Dieser Wärmedämmschicht kommt dabei nur eine untergeordnete Bedeutung zu.

Aus der US 6, 106, 231 ist eine Gasturbine bekannt bei denen die Oberflächen der Turbinenschaufeln bereichsweise mit einer thermischen Schutzschicht versehen sind.

### Darstellung der Erfindung

Aufgabe der vorliegenden Erfindung ist es daher, eine Strömungsmaschinenschaufel der eingangs genannten Art anzugeben, welche die Nachteile des Standes der Technik vermeidet. Die erfindungsgemäße Strömungsmaschinenschaufel soll insbesondere im Betrieb eine verbesserte Temperaturverteilung aufweisen. Daneben soll die erfindungsgemäße Strömungsmaschinenschaufel im Vergleich mit dem Stand der Technik die Strömungsverluste vermindern.

Diese Aufgabe wird mit der im Patentanspruch 1 angegebenen Strömungsmaschinenschaufel gelöst.

Kern der Erfindung ist es also, gezielt nur Teilbereiche des Schaufelblattes mit der Wärmedämmschicht zu versehen, und andere Teilbereiche, welche in geringerem Masse mit Heissgas beaufschlagt werden, oder welche verstärkt gekühlt werden, sei es durch die Strömung eines Kühlfluides oder durch Wärmeabfuhr an angrenzendes Material, ohne Wärmedämmschicht auszuführen. Grundsätzlich liegt der Erfindung eine Strömungsmaschinenschaufel zugrunde, welche ein Schaufelblatt aufweist, dessen Aussenkontur mit einer Wärmedämmschicht versehen ist. In der Ausführungsform der Erfindung ist die Aussenkontur des Schaufelblattes mit einer Wärmedämmschicht versehen, wobei ein an die Hinterkante des Schaufelblattes angrenzender Bereich ohne Wärmedämmschicht ausgeführt ist. Gemäss der Ausführungsform der Erfindung weist die Strömungsmaschinennschaufel am Schaufelfuss eine Schaufelplattform auf, wobei das Schaufelblatt in einem an die Schaufelplattform angrenzenden Bereich ohne Wärmedämmschicht ausgeführt ist. Gemäss einer weiteren Ausführungsform der Erfindung weist die Strömungsmaschinenschaufel im schaufelkopfseitigen Bereich eine kopfseitige Plattform auf, wobei das Schaufelblatt in einem an die kopfseitige Plattform angrenzenden Bereich auch ohne Wärmedämmschicht ausgeführt ist. Selbstverständlich können diese Ausführungsformen untereinander kombiniert werden, derart, dass beispielsweise eine Strömungsmaschinenschaufel resultiert, deren Schaufelblatt auf der Aussenkontur eine Wärmedämmschicht aufweist, wobei jedoch der Hinterkantenbereich, eine kopfseitiger Randbereich, und ein fussseitiger Randbereich des Schaufelblattes ohne Wärmedämmschicht ausgeführt sind.

Das Schaufelblatt der Strömungsmaschinenschaufel weist eine Sehnenlänge auf, welche in gerader Linie von der Schaufelvorderkante zur Schaufelhinterkante gemessen wird. Die Sehnenlänge kann über die Schaufelblatthöhe, welche sich vom Schaufelfuss zum Schaufelkopf erstreckt, variieren. Die Schaufelhinterkante läuft im Allgemeinen nicht idealisiert spitz aus, sondern endet mit einem Hinterkantenradius. In einer häufig verwendeten Bauart wird die Schaufelkontur von einer druckseitigen Wand und einer saugseitigen Wand gebildet, wobei zwischen der druckseitigen Wand und der saugseitigen Wand ein Hohlraum eingeschlossen ist. In dem Hohlraum sind dann bevorzugt Kanäle zur Durchströmung mit einem Kühlfluid, insbesondere mit Kühlluft, ausgebildet. In einer häufig realisierten Bauart ist der Hohlraum im Bereich der Schaufelblatthinterkante offen, derart, dass durch die Hinterkante Kühlfluid ausströmen kann, welches die Hinterkante kühlt. Zur Stabilisierung der Schaufelblattstruktur ist es bekannt, in dem Hohlraum Stege und/oder Rippen anzuordnen, welche die saugseitige Wand und die druckseitige Wand miteinander verbinden und auf diese Weise stabilisieren. Derartige Stege und/oder Rippen sind insbesondere im Bereich der Schaufelblatthinterkante angeordnet.

Die Wärmedämmschicht endet in der Ausführungsform der Erfindung in der von der Schaufelblattvorderkante zur Schaufelblatthinterkante verlaufenden Umströmungsrichtung eine Distanz stromauf der Schaufelblatthinterkante. Gemäss einer ersten Variante ist diese Distanz so bemessen, dass sie grösser oder gleich 10% der Sehnenlänge des Schaufelblattes ist. In einer zweiten Variante ist die Distanz so bemessen, dass sie kleiner oder gleich 15 % des Sehnenlänge des Schaufelblattes ist. Die Sehnenlänge des Schaufelblattes variiert häufig über der Schaufelblatthöhe. Dabei kann die Wärmedämmschicht so angeordnet sein, dass das lokale Verhältnisse der Distanz zur Sehnenlänge über die gesamte Schaufelblatthöhe, konstant ist. Ebenso kann die Wärmedämmschicht so angeordnet sein, dass die Distanz, um welche die Wärmedämmschicht stromauf der Schaufelblatthinterkante endet, über die gesamte Schaufelblatthöhe als Absolutwert konstant ist.

In einer dritten Variante der ersten Ausführungsform ist die Distanz, um welche die Wärmedämmschicht stromauf der Hinterkante endet, grösser oder gleich dem fünffachen des Hinterkantenradius. Gemäss einer vierten Variante der ersten Ausführungsform ist die Distanz, um welche die Wärmedämmschicht stromauf der Hinterkante endet, kleiner oder gleich dem achtfachen des Hinterkantenradius. In einer weiteren Variante der ersten Ausführungsform sind in dem innerhalb des Schaufelblattes gebildeten Hohlraum ein erster Steg oder eine erste Reihe von Stegen angeordnet, welche einen ersten Abstand von der Schaufelblatthinterkante aufweisen. Die Distanz, um welche die Wärmedämmschicht stromauf der Schaufelblatthinterkante endet, ist grösser oder gleich diesem ersten Abstand. Gemäss noch einer Variante der ersten Ausführungsform sind in dem innerhalb des Schaufelblattes gebildeten Hohlraum ein zweiter Steg oder eine zweite Reihe von Stegen in einem zweiten Abstand von der Schaufelblatthinterkante angeordnet. Die Distanz, um welche der Wärmedämmschicht stromauf der Schaufelblatthinterkante endet, ist kleiner oder gleich dem zweiten Abstand. Die angegebenen Varianten der ersten Ausführungsform können untereinander kombiniert werden.

In Ausführungsformen der Erfindung ist der Übergang vom Schaufelblatt zur kopfseitigen Plattform beziehungsweise zur fussseitigen Schaufelplattform im Allgemeinen ausgerundet mit einem Übergangsradius oder mit mehreren Übergangsradien ausgeführt. Die Breite des von der Wärmedämmschicht unbedeckten Bereiches benachbart zur fussseitigen Schaufelplattform ist in einer Variante der einen Ausführungsform grösser als der an die fussseitige Plattform angrenzende Übergangsradius. Die Breite des von der Wärmedämmschicht unbedeckten Bereiches benachbart zur kopfseitigen Schaufelplattform ist in einer Variante der weiteren Ausführungsform grösser als der an die kopfseitige Plattform angrenzende Übergangsradius.

Mit Vorteil ist auf dem nicht von der Wärmedämmschicht bedeckten Bereich des Schaufelblattes eine Oxidationsschutzschicht aufgebracht, derart, dass die Oberfläche des Schaufelblattes entweder von der Wärmedämmschicht oder von der Oxidationsschutzschicht gebildet wird. In einer Ausführungsform bedeckt die Oxidationsschutzschicht die gesamte äussere Schaufelblattkontur, wobei sie in den von der Wärmedämmschicht bedeckten Bereichen als Haftvermittlerschicht ("Bond Coat") zwischen dem Schaufel-Grundwerkstoff und der Wärmedämmschicht angeordnet ist.

Zur Herstellung einer erfindungsgemässen Strömungsmaschinenschaufel wird ein Schaufel-Grundelement aus einem Grundwerkstoff hergestellt, welches ein Schaufelblatt mit einer äusseren Schaufelblattkontur umfasst, und es wird auf der Schaufelblatt-Aussenkontur eine Wärmedämmschicht ganz gezielt nur auf wohldefinierten Teilbereichen aufgebracht. In einer Variante des Herstellungsverfahrens wird vor dem Aufbringen der Wärmedämmschicht eine auch als Oxidationsschutzschicht wirkende Haftvermittlerschicht auf die gesamte Schaufelblatt-Aussenkontur aufgebracht, und nachfolgend auf der Schaufelblatt- Aussenkontur gezielt in wohldefinierten Teilbereichen eine Wärmedämmschicht auf die Haftvermittlerschicht aufgebracht.

Weitere Ausführungsformen der Erfindung erschliessen sich dem Fachmann im Lichte der Unteransprüche und der nachfolgend dargestellten Ausführungsbeispiele.

### Kurze Beschreibung der Zeichnung

Die Erfindung wird nachfolgend anhand eines in der Zeichnung illustrierten Ausführungsbeispiels näher erläutert. Im Einzelnen zeigen
Figur 1 eine Seitenansicht einer erfindungsgemässen Strömungsmaschinenschaufel;
Figur 2 einen Längsschnitt durch die Strömungsmaschinenschaufel aus Figur 1, entlang der mit II-II gekennzeichneten Linie;
Figur 3 einen Querschnitt durch die in Figur 1 dargestellte Strömungsmaschinenschaufel; und
Figuren 4 und 5 Detaildarstellungen der Hinterkante der Strömungsmaschinenschaufel, wie sie in Figur 3 dargestellt ist.

Es sind im Wesentlichen nur die für das Verständnis der Erfindung massgeblichen Merkmale dargestellt. Die Ausführungsbeispiele sollen dem besseren Verständnis der Erfindung dienen, und nicht zur Einschränkung der in den Ansprüchen gekennzeichneten Erfindung herangezogen werden.

### Wege zur Ausführung der Erfindung

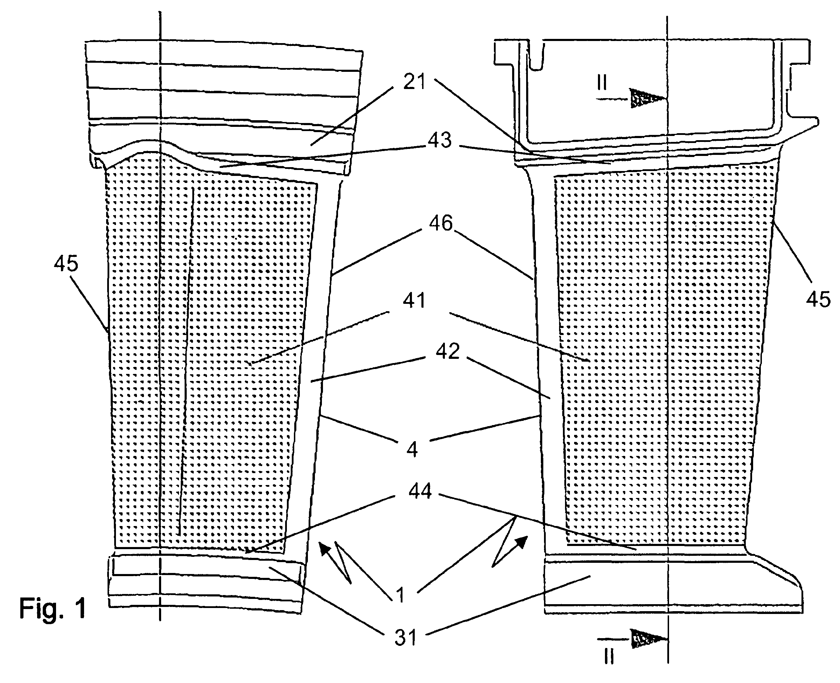

In der Figur 1 ist eine erfindungsgemässe Strömungsmaschinenschaufel in zwei Seitenansichten dargestellt. Die Strömungsmaschinenschaufel 1 umfasst ein Schaufelblatt 4, eine schaufelfussseitige Plattform 21, und eine kopfseitige Plattform 31. Die kopfseitige Plattform ist beispielsweise ein Element eines Schaufeldeckbandes. Das Schaufelblatt 4 umfasst eine Vorderkante 45 und eine Schaufelblatthinterkante 46. Im Betrieb wird die Aussenkontur des Schaufelblattes in einer Richtung von der Schaufelblattvorderkante 45 zur Schaufelblatthinterkante 46 von einer Heissgasströmung umströmt. Auf der Schaufelblatt-Aussenkontur ist ein Bereich 41 mit einer Wärmedämmschicht versehen. Der Bereich, in dem die Wärmedämmschicht 41 auf das Schaufelblatt aufgebracht ist, endet in Umströmungsrichtung gesehen eine Distanz stromauf der Schaufelblatthinterkante, so, dass an der Schaufelblatthinterkante ein nicht mit der Wärmedämmschicht versehener Bereich 42 vorliegt. Weiterhin sind jeweils benachbart zu den Plattformen 21 und 31 weitere Bereiche 43 und 44 des Schaufelblattes ohne Wärmedämmschicht ausgeführt. Wie unten dargelegt, ist im Inneren des Schaufelblattes ein Hohlraum eingeschlossen, welcher zur Durchströmung mit Kühlluft konfiguriert ist. Wenigstens ein Teil der Kühlluft wird an der Hinterkante 46 des Schaufelblattes 4 ausgeblasen. Dadurch ist der Hinterkantenbereich des Schaufelblattes vergleichsweise intensiv gekühlt. Weiterhin findet im Betrieb der Gasturbogruppe, in welcher die Strömungsmaschinenschaufel eingebaut ist, ein Wärmeeintrag in das Schaufelblatt statt, wohingegen der Wärmeeintrag in die Plattformen 21 und 31 deutlich geringer ist. Dadurch stellen sich Wärmeströme aus dem Schaufelblatt zu den Plattformen hin ein. Hinsichtlich der Netto-Wärmebilanzen sind demgemäss die Randbereiche des Schaufelblattes, welche an die Plattformen und an die Hinterkante grenzen, geringer belastet als der Rest des Schaufelblattes. Diesem Umstand wird dadurch Rechnung getragen, dass der zunächst stärker belastete Teil des Schaufelblattes mit einer Wärmedämmschicht versehen ist, wohingegen die genannten Randbereiche ohne Wärmedämmschicht ausgeführt sind. Dadurch ist der Wärmeübergang in diesen Randbereichen höher als in dem beschichteten Bereich, wodurch die verstärkte Wärmeabfuhr ausgeglichen wird. In der Summe führt dies zu einer Vergleichmässigung der Temperaturverteilung im Schaufelblatt. Die Erfindung beruht demnach also darauf, dass in Bereichen, in denen eine verstärkte Wärmeabfuhr stattfindet, durch das Weglassen der Wärmedämmschicht gleichzeitig der Wärmeeintrag erhöht wird.

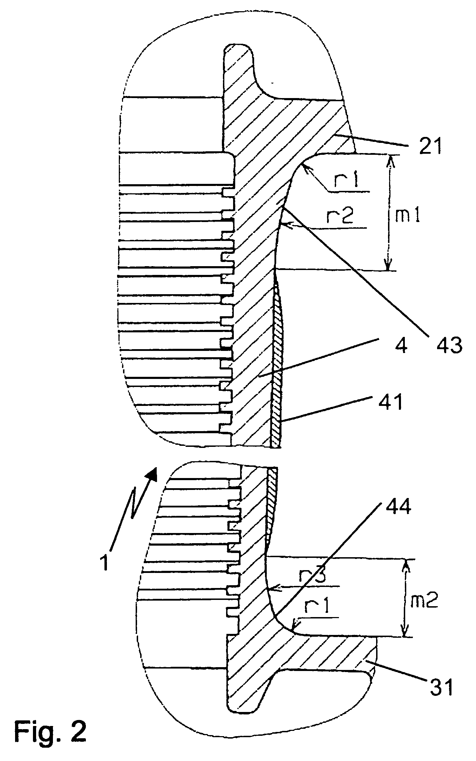

In der Figur 2 ist ein Schnitt durch die erfindungsgemässe Strömungsmaschinenschaufel entlang der in Figur 1 dargestellten Linie II-II dargestellt. Der Übergang vom Schaufelblatt 4 zu den Plattformen 21 und 31 erfolgt mit Ausrundungen. Die Ausrundungen weisen verschiedene Übergangsradien auf, wobei direkt benachbart zu den Plattformen 21 und 31 die Übergangsradien das Mass r1 aufweisen. Es ist keineswegs zwingend, dass, wie dargestellt, diese Radien an der kopfseitigen Plattform und an der fussseitigen Plattform identisch sind. Auf der Aussenkontur des Schaufelblattes 4 ist die Wärmedämmschicht 41 aufgebracht. Benachbart zu den Plattformen 21 und 31 liegen die nicht von der Wärmedämmschicht bedeckten Bereiche 43 und 44 vor. Die Breite m1 des fussseitig nicht bedeckten Bereiches ist grösser als der an die fussseitige Plattform 21 angrenzende Übergangsradius r1. Die Breite m2 des kopfseitig nicht bedeckten Bereiches ist grösser als der an die kopfseitige Plattform 21 angrenzende Übergangsradius r1. In einer Ausführungsform der Erfindung sind die Masse m1 und m2 so bemessen, dass die Forderung erfüllt ist: m1>r1+r2/3 und m2>r1+r3/3.

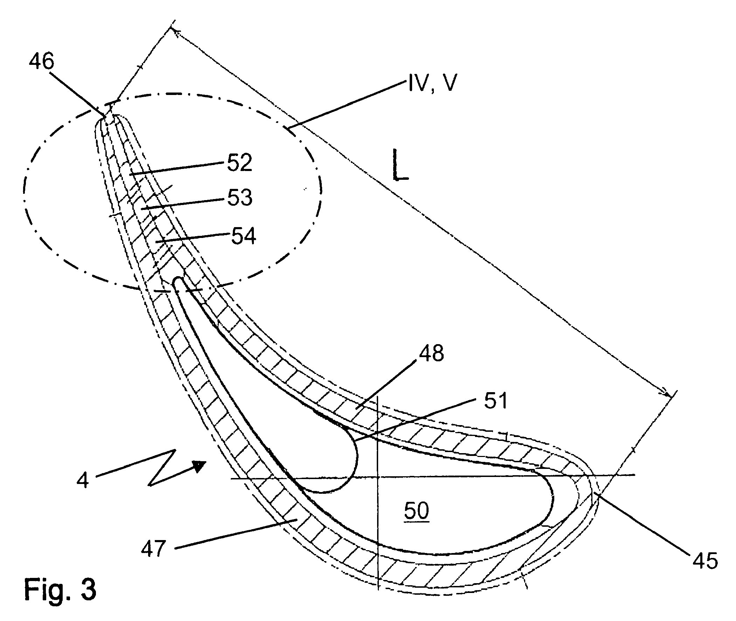

Figur 3 zeigt einen Querschnitt durch das Schaufelblatt 4 einer in Figur 1 dargestellten erfindungsgemässen Strömungsmaschinenschaufel. In dieser Darstellung ist das tragflügelartige Profil des Schaufelblattes 4 zu erkennen. Die Schaufelkontur wird dabei durch eine saugseitige Wand 47 und eine druckseitige Wand 48 gebildet. Zwischen der saugseitigen Wand und der druckseitigen Wand ist im Inneren des Schaufelblattes ein Hohlraum 50 gebildet, der für die Durchströmung mit Kühlluft konfiguriert ist. Hierzu sind beispielhaft Strömungsleitbleche 51 angedeutet. Der Hohlraum 50 ist zur Hinterkante 46 des Schaufelblattes hin offen, dergestalt, dass Kühlluft durch Ausblaseöffnungen an der Hinterkante des Schaufelblattes austreten kann und dadurch den Hinterkantenbereich des Schaufelblattes kühlt. Die austretende Kühlluft reduziert weiterhin die Strömungsnachläufe an der Schaufelhinterkante, und verbessert damit die Aerodynamik des Schaufelblattes. Das Profil des Schaufelblattes weist eine Sehnenlänge L auf, welche von der Vorderkante 45 zur Hinterkante 46 des Schaufelblattes gemessen wird. Im Bereich der Schaufelblatthinterkante sind Stege 52, 53 und 54 angeordnet, welche die saugseitige Wand 47 und die druckseitige Wand 48 miteinander verbinden. Diese gewährleisten im Bereich der Schaufelhinterkante eine verbesserte mechanische Stabilität. Der durch die strichpunktierte Linie gekennzeichnete hinterkantennahe Bereich des Schaufelblattes ist in den Figuren 4 und 5 detaillierter dargestellt, und wird nachfolgend näher beschriebenen.

Anhand der Figur 4 wird die Geometrie der Stege 52, 53 und 54 kurz erläutert. Die Stege weisen einen Abstand zur Hinterkante 46 auf. Dabei ist ein erster Steg 52 in einem ersten Abstand f1 zur Hinterkante angeordnet. Ein zweiter Steg 53 ist in einem zweiten Abstand f2 zur Hinterkante angeordnet. Ein dritter Steg 54 ist in einem Abstand f3 zur Hinterkante angeordnet. Die dargestellte Stege müssen keineswegs in einer Ebene angeordnet sein, sondern können in Richtung der Schaufelhöhe an unterschiedlichen Positionen liegen. Gemäss einer Ausführungsform der Erfindung ist die Distanz, um welche die Wärmedämmschicht in Strömungsrichtung gesehen stromauf der Schaufelhinterkante endet, grösser als der Wert f1 und kleiner als der Wert f2.

Figur 5 erläutert die Geometrie der Schaufelblatthinterkante detaillierter. Idealerweise läuft das Schaufelblatt an der Hinterkante spitz aus. Diese Geometrie kann jedoch aus verschiedenen Gründen nicht realisiert werden. Die Schaufelhinterkante ist daher mit einem Hinterkantenradius r ausgeführt. Im Interesse einer besten Aerodynamik sollte dieser Radius möglichst klein sein, und die Schaufelhinterkante sollte eine möglichst geringe Dicke aufweisen, damit die vom Nachlauf des Schaufelblattes hervorgerufenen Strömungsverluste minimiert werden. Aufgrund der Ausblaseöffnungen an der Schaufelblatthinterkante ist der Hinterkantenradius unterbrochen. Die Schaufelblattwände 47 und 48, wie auch die Stege, bestehend aus einem Schaufel-Grundmaterial. Im Allgemeinen sind diese Strukturen durch Giessen aus einer Metalllegierung hergestellt. Auf der Schaufelblatt-Aussenkontur ist eine Haftvermittlerschicht 49 angeordnet. Auf der Haftvermittlerschicht ist die Wärmedämmschicht 41 angeordnet, welche im allgemeinen eine keramische Schutzschicht, zum Beispiel ZrO₂, ist. In Umströmungsrichtung des Schaufelblattes gesehen endet die Wärmedämmschicht eine Distanz K stromauf der Schaufelhinterkante. In dem nicht von der Wärmedämmschicht bedeckten Bereich 42 an der Schaufelblatthinterkante wirkt die Haftvermittlerschicht 49 als Oxidationsschutzschicht auf der metallischen Wand des Schaufelblattes. In dem unmittelbar an die Schaufelblatthinterkante angrenzenden Bereich werden die Schaufelblattwände durch die ausströmende Kühlluft wesentlich intensiver gekühlt als in den stromauf davon gelegenen Bereichen des Schaufelblattes. Dieser Effekt wird dadurch kompensiert, dass der Bereich 42, welcher an die Schaufelblatthinterkante angrenzt, nicht mit der Wärmedämmschicht bedeckt ist, wodurch auch der Wärmeeintrag in das Schaufel-Grundmaterial erhöht wird. Gleichzeitig wird durch das Weglassen der Wärmedämmschicht die Dicke der Schaufelblatthinterkante vermindert, und dadurch die Aerodynamik des Schaufelblattes verbessert. Eine weitere Verminderung der Strömungsverluste resultiert daraus, dass ein geringerer Teil der Oberfläche mit der im Allgemeinen vergleichsweise rauen Wärmedämmschicht bedeckt ist, woraus eine Verminderung der Reibungs-Strömungsverluste resultiert. Zur Festlegung des Masses K, also der Distanz, um welche die Wärmedämmschicht in Umströmungsrichtung des Schaufelblattprofiles gesehen stromauf der Hinterkante endet, können beispielsweise die folgenden Kriterien Anwendung finden: Die Distanz K ist grösser als der oder gleich dem Abstand f1 des ersten Steges 52 von der Hinterkante und/oder kleiner als der oder gleich dem Abstand f2 des zweiten Steges 53 von der Hinterkante. Alternativ wird das Mass K so bestimmt, dass es grösser oder gleich dem fünffachen Mass des Hinterkantenradius und/oder kleiner oder gleich dem achtfachen Mass des Hinterkantenradius ist. Gemäss einem weiteren möglichen Auslegungskriterium ist das Mass K grösser oder gleich 10% der Sehnenlänge L und/oder kleiner oder gleich 15% der Sehnenlänge L. Diese Aufzählung kann und will nicht abschliessend sein; je nach konkreten Gegebenheiten können auch andere Auslegungskriterien sinnvoll sein. Wenn der verwendete Bezugswert über der Schaufelblatthöhe variiert, so kann jeweils der lokale Wert zur Auslegung der Distanz K herangezogen werden. Andererseits kann die Distanz K ohne weiteres auch so bemessen werden, dass der Absolutwert über der Schaufelblatthöhe konstant bleibt. Die oben angeführten Auslegungskriterien müssen dabei lokal nicht zwingend verletzt werden.

Im Lichte der vorstehenden Ausführungen erschliessen sich dem Fachmann weitere Ausführungsformen der in den Ansprüchen gekennzeichneten Erfindung.

### Bezugszeichenliste

- 1: Strömungsmaschinenschaufel
- 4: Schaufelblatt
- 21: Schaufelplattform, fussseitige Plattform
- 31: kopfseitige Plattform
- 41: Wärmedämmschicht, mit Wärmedämmschicht beschichteter Bereich
- 42: Bereich ohne Wärmedämmschicht an der Hinterkante
- 43: fussseitiger Bereich ohne Wärmedämmschicht
- 44: kopfseitiger Bereich ohne Wärmedämmschicht
- 45: Schaufelblattvorderkante
- 46: Schaufelblatthinterkante
- 47: saugseitige Wand
- 48: druckseitige Wand
- 49: Haftvermittlerschicht und Oxidationsschutzschicht
- 50: Hohlraum
- 51: Strömungsleitblech
- 52: erster Steg
- 53: zweiter Steg
- 54: dritter Steg
- f1: Abstand des ersten Steges von der Schaufelblatthinterkante
- f2: Abstand des zweiten Steges von der Schaufelblatthinterkante
- f3: Abstand des dritten Steges von der Schaufelblatthinterkante
- K: Distanz, um welche die Wärmedämmschicht stromauf der Hinterkante endet
- m1: Breite des fussseitigen Bereiches ohne Wärmedämmschicht
- m2: Breite des kopfseitigen Bereiches ohne Wärmedämmschicht
- r: Hinterkantenradius
- r1: Übergangsradius
- r2: Übergangsradius
- r3: Übergangsradius

## Patentansprüche

1. Strömungsmaschinenschaufel (1), umfassend ein Schaufelblatt (4) mit einem kopfseitigen Ende und einem fussseitigen Ende, einer Schaufelblattvorderkante (45), und einer Schaufelblatthinterkante (46), wobei das Schaufelblatt (4) auf einer Außenseite einer im Betrieb heissgasumströmten Schaufelblattkontur eine Wärmedämmschicht (41) aufweist, und gezielt nur erste Teilbereiche des Schaufelblattes die Wärmedämmschicht aufweisen und wohldefinierte zweite Teilbereiche (42,43, 44) gezielt ohne Wärmedämmschicht ausgeführt sind, und wobei die Wärmedämmschicht (41) in der von der Schaufelblattvorderkante (45) zur Schaufelblatthinterkante (46) verlaufenden Umströmungsrichtung eine Distanz (K) stromauf der Schaufelblatthinterkante endet, derart, dass ein stromaufwärtiger erster Bereich (41) des Schaufelblattes (4) eine Wärmedämmschicht aufweist, und ein Hinterkantenbereich (42) des Schaufelblattes (4) ohne Wärmedämmschicht ausgeführt ist, wobei die Wärmedämmschicht (41) auf das Schaufelblatt (4) des aus einem Grundwerkstoff hergestellten Schaufelgrundelements oder auf eine auf das Schaufelblatt (4) aufgebrachte Haftvermittlerschicht (49) aufgebracht ist, **dadurch gekennzeichnet, dass** das Schaufelblatt (4) in dem an eine schaufelfusseitige Plattform (21) angrenzenden Bereich (43) ohne Wärmedämmschicht ausgeführt ist.

2. Strömungsmaschinenschaufel gemäß Anspruch 1, **dadurch gekennzeichnet, dass** die Distanz (K), um welche die Wärmedämmschicht stromauf der Schaufelblatthinterkante endet, grösser oder gleich 10 % der Sehnenlänge (L) des Schaufelblattes ist.

3. Strömungsmaschinenschaufel gemäß einem der Ansprüche 1 oder 2, **dadurch gekennzeichnet, dass** die Distanz (K), um welche die Wärmedämmschicht stromauf der Schaufelblatthinterkante endet, kleiner oder gleich 15 % der Sehnenlänge (L) des Schaufelblattes ist.

4. Strömungsmaschinenschaufel gemäß Anspruch 1, wobei die Schaufelblatthinterkante (46) einen Hinterkantenradius (r) aufweist, **dadurch gekennzeichnet, dass** die Distanz (K), um welche die Wärmedämmschicht stromauf der Hinterkante endet, grösser oder gleich dem Fünffachen des Hinterkantenradius (r) ist.

5. Strömungsmaschinenschaufel gemäß einem der Ansprüche 1 oder 4, wobei die Schaufelblatthinterkante einen Hinterkantenradius (r) aufweist, **dadurch gekennzeichnet, dass** die Distanz (K), um welche die Wärmedämmschicht stromauf der Hinterkante endet, kleiner oder gleich dem achtfachen des Hinterkantenradius ist.

6. Strömungsmaschinenschaufel gemäß einem der vorstehenden Ansprüche, **dadurch gekennzeichnet, dass** die Schaufelblattkontur von einer druckseitigen Wand (48) und einer saugseitigen Wand (47) gebildet ist, wobei zwischen der druckseitigen Wand und der saugseitigen Wand ein Hohlraum (50) eingeschlossen ist.

7. Strömungsmaschinenschaufel gemäß Anspruch 6, **dadurch gekennzeichnet, dass** in dem Hohlraum Kanäle zur Durchströmung mit einem Kühlfluid, insbesondere mit Kühlluft, ausgebildet sind.

8. Strömungsmaschinenschaufel gemäß einem der Ansprüche 6 oder 7, **dadurch gekennzeichnet, dass** in dem Hohlraum Stege und/oder Rippen (52,53, 54) angeordnet sind, welche die saugseitige Wand und die druckseitige Wand verbinden.

9. Strömungsmaschinenschaufel gemäß Anspruch 8, welche von der Hinterkante (46) des Schaufelblattes aus gesehen einen ersten Steg (52) mit einem ersten Abstand (f1) zur Schaufelblatthinterkante aufweist, **dadurch gekennzeichnet, dass** die Distanz (K), um welche die Wärmedämmschicht in Umströmungsrichtung der Schaufelblattkontur gesehen stromauf der Schaufelblatthinterkante endet, grösser oder gleich dem ersten Abstand (f1) ist.

10. Strömungsmaschinenschaufel gemäß einem der Ansprüche 8 oder 9, welche von der Hinterkante (46) des Schaufelblattes aus gesehen einen zweiten Steg (53) mit einem zweiten Abstand (f2) zur Schaufelblatthinterkante aufweist, **dadurch gekennzeichnet, dass** die Distanz (K), um welche die Wärmedämmschicht in Umströmungsrichtung der Schaufelblattkontur gesehen stromauf der Schaufelblatthinterkante endet, kleiner oder gleich dem zweiten Abstand (f2) ist.

11. Strömungsmaschinenschaufel gemäß einem der vorhergehenden Ansprüche, wobei der Übergangsbereich vom Schaufelblatt zur Schaufelplattform einen an die Schaufelplattform angrenzenden ersten Übergangsradius (r1) aufweist, **dadurch gekennzeichnet, dass** die Breite (m1) des von der Wärmedämmschicht unbedeckten Bereiches grösser als der erste Übergangsradius ist.

12. Strömungsmaschinenschaufel gemäß einem der vorstehenden Ansprüche, wobei die Strömungsmaschinenschaufel im schaufelkopfseitigen Bereich eine kopfseitige Plattform (31) aufweist, **dadurch gekennzeichnet, dass** das Schaufelblatt in einem an die kopfseitige Plattform angrenzenden Bereich (44) ohne Wärmedämmschicht ausgeführt ist.

13. Strömungsmaschinenschaufel gemäß Anspruch 12, wobei der Übergangsbereich vom Schaufelblatt zur Schaufelplattform einen an die kopfseitige Plattform angrenzenden zweiten Übergangsradius (r1) aufweist, **dadurch gekennzeichnet, dass** die Breite (m2) des von der Wärmedämmschicht unbedeckten Bereiches grösser als der zweite Übergangsradius ist.

14. Strömungsmaschinenschaufel gemäß einem der vorstehenden Ansprüche, **dadurch gekennzeichnet, dass** der von der Wärmedämmschicht nicht bedeckte Bereich des Schaufelblattes mit einer Oxidationsschutzschicht (49) bedeckt ist.

15. Strömungsmaschinenschaufel gemäß Anspruch 14, **dadurch gekennzeichnet, dass** die Oxidationsschutzschicht die gesamte äußere Schaufelblattkontur bedeckt, und in den von der Wärmedämmschicht bedeckten Bereichen als Haftvermittlerschicht zwischen dem Schaufel-Grundwerkstoff und der Wärmedämmschicht angeordnet ist.

16. Verfahren zur Herstellung einer Strömungsmaschinenschaufel gemäß einem der vorstehenden Ansprüche, umfassend:
ein Schaufel-Grundelement aus einem Grundwerkstoff herzustellen, welches Schaufel-Grundelement ein Schaufelblatt (4) mit einer äußeren Schaufelblattkontur umfasst, und, eine Wärmedämmschicht (41) auf der Außenseite des Schaufelblattes (4) anzubringen, wobei die Wärmedämmschicht (41) gezielt nur auf ganz bestimmte Teilbereiche der Schaufelblatt-Außenkontur abdeckt, so dass ein Hinterkantenbereich (42) des Schaufelblattes (4) ohne Wärmedämmschicht ausgeführt ist, wobei die Wärmedämmschicht (41) auf das Schaufelblatt (4) aufgebracht wird, **dadurch gekennzeichnet, dass** das Schaufelblatt (4) in dem an eine schaufelfusseitige Plattform (21) angrenzenden Bereich (43) ohne Wärmedämmschicht ausgeführt ist.

17. Verfahren gemäß Anspruch 16, **dadurch gekennzeichnet, dass** vor dem Aufbringen der Wärmedämmschicht (41) eine Haftvermittlerschicht (49) auf die gesamte Schaufelblatt-Außenkontur aufgebracht wird.

## Claims

1. Fluid flow machine blade (1), comprising an airfoil (4) having a head-side end and a foot-side end, an airfoil front edge (45), and an airfoil rear edge (46), the airfoil (4), on an outer side of an airfoil contour which, during operation, is flowed around by hot gas, having a thermal barrier coating (41), and purposefully only first part-regions of the airfoil having the thermal barrier coating and well-defined second part-regions (42, 43, 44) being realized purposefully without thermal barrier coating, and the thermal barrier coating (41), in the direction of circumfluence running from the airfoil front edge (45) to the airfoil rear edge (46), ending a distance (K) upstream of the airfoil rear edge such that an upstream first region (41) of the airfoil (4) has a thermal barrier coating, and a rear edge region (42) of the airfoil (4) is realized without thermal barrier coating, wherein the thermal barrier coating (41) is applied to the airfoil (4) of the blade basic element manufactured from a base material or to a bond coat (49) applied to the airfoil (4), **characterized in that** the airfoil (4), in the region (43) adjoining a blade-foot-side platform (21), is realized without thermal barrier coating.

2. Fluid flow machine blade according to Claim 1, **characterized in that** the distance (K) by which the thermal barrier coating ends upstream of the airfoil rear edge is greater than or equal to 10% of the chord length (L) of the airfoil.

3. Fluid flow machine blade according to either of Claims 1 and 2, **characterized in that** the distance (K) by which the thermal barrier coating ends upstream of the airfoil rear edge is less than or equal to 15% of the chord length (L) of the airfoil.

4. Fluid flow machine blade according to Claim 1, the airfoil rear edge (46) having a rear edge radius (r), **characterized in that** the distance (K) by which the thermal barrier coating ends upstream of the rear edge is greater than or equal to five times the rear edge radius (r).

5. Fluid flow machine blade according to either of Claims 1 and 4, the airfoil rear edge having a rear edge radius (r), **characterized in that** the distance (K) by which the thermal barrier coating ends upstream of the rear edge is less than or equal to eight times the rear edge radius.

6. Fluid flow machine blade according to one of the preceding claims, **characterized in that** the airfoil contour is formed by a pressure-side wall (48) and a suction-side wall (47), the pressure-side wall and the suction-side wall enclosing between them a cavity (50).

7. Fluid flow machine blade according to Claim 6, **characterized in that**, in the cavity, ducts are formed for the passage of a cooling fluid, especially of cooling air.

8. Fluid flow machine blade according to either of Claims 6 and 7, **characterized in that**, in the cavity, webs and/or ribs (52, 53, 54) are disposed, which connect the suction-side wall and the pressure-side wall.

9. Fluid flow machine blade according to Claim 8, which, viewed from the rear edge (46) of the airfoil, has a first web (52) having a first distance (f1) to the airfoil rear edge, **characterized in that** the distance (K) by which the thermal barrier coating, viewed in the direction of circumfluence of the airfoil contour, ends upstream of the airfoil rear edge is greater than or equal to the first distance (f1).

10. Fluid flow machine blade according to either of Claims 8 and 9, which, viewed from the rear edge (46) of the airfoil, has a second web (53) having a second distance (f2) to the airfoil rear edge, **characterized in that** the distance (K) by which the thermal barrier coating, viewed in the direction of circumfluence of the airfoil contour, ends upstream of the airfoil rear edge is less than or equal to the second distance (f2).

11. Fluid flow machine blade according to one of the preceding claims, the transition region from the airfoil to the blade platform having a first transition radius (r1) adjoining the blade platform, **characterized in that** the width (m1) of the region uncovered by the thermal barrier coating is greater than the first transition radius.

12. Fluid flow machine blade according to one of the preceding claims, the fluid flow machine blade having in the blade-head-side region a head-side platform (31), **characterized in that** the airfoil, in a region (44) adjoining the head-side platform, is realized without thermal barrier coating.

13. Fluid flow machine blade according to Claim 12, the transition region from the airfoil to the blade platform having a second transition radius (r1) adjoining the head-side platform, **characterized in that** the width (m2) of the region uncovered by the thermal barrier coating is greater than the second transition radius.

14. Fluid flow machine blade according to one of the preceding claims, **characterized in that** the region of the airfoil which is not covered by the thermal barrier coating is covered with an anti-oxidization layer (49).

15. Fluid flow machine blade according to Claim 14, **characterized in that** the anti-oxidization layer covers the entire outer airfoil contour and, in the regions covered by the thermal barrier coating, is disposed as a bond coat between the blade base material and the thermal barrier coating.

16. Process for manufacturing a fluid flow machine blade according to one of the preceding claims, comprising:
the manufacture of a blade basic element from a base material, which blade basic element comprises an airfoil (4) having an outer airfoil contour, and the application of a thermal barrier coating (41) to the outside of the airfoil (4), the thermal barrier coating (41) covering purposefully only wholly defined part-regions of the airfoil outer contour so that a rear edge region (42) of the airfoil (4) is realized without thermal barrier coating, wherein the thermal barrier coating (41) is applied to the airfoil (4), **characterized in that** the airfoil (4), in the region (43) adjoining a blade-foot-side platform (21), is realized without thermal barrier coating.

17. Process according to Claim 16, **characterized in that** prior to the application of the thermal barrier coating (41), a bond coat (49) is applied to the entire airfoil outer contour.

## Revendications

1. Aube de turbomachine (1), comprenant une pale (4) avec une extrémité de tête et une extrémité de pied, un bord de pale avant (45) et un bord de pale arrière (46), dans laquelle la pale (4) présente une couche d'isolation thermique (41) sur un côté extérieur d'un contour de pale balayé par des gaz chauds en cours de fonctionnement, et de façon ciblée seules des premières régions partielles de la pale présentent la couche d'isolation thermique et des deuxièmes régions partielles bien définies (42, 43, 44) sont réalisées de façon ciblée sans couche d'isolation thermique, et dans laquelle la couche d'isolation thermique (41) se termine à une distance (K) en amont du bord de pale arrière, dans la direction de balayage s'étendant du bord de pale avant (45) au bord de pale arrière (46), de telle manière qu'une première région amont (41) de la pale (4) présente une couche d'isolation thermique, et qu'une région de bord arrière (42) de la pale (4) soit réalisée sans couche d'isolation thermique, dans laquelle la couche d'isolation thermique (41) est déposée sur la pale (4) de l'élément de base de l'aube fabriqué en un matériau de base ou sur une couche d'accrochage (49) déposée sur la pale (4), **caractérisée en ce que** la pale (4) est réalisée sans couche d'isolation thermique dans la région (43) adjacente à une plate-forme de pied d'aube (21).

2. Aube de turbomachine selon la revendication 1, **caractérisée en ce que** la distance (K), à laquelle la couche d'isolation thermique se termine en amont du bord de pale arrière, est supérieure ou égale à 10 % de la longueur de corde (L) de la pale.

3. Aube de turbomachine selon une des revendications 1 ou 2, **caractérisée en ce que** la distance (K), à laquelle la couche d'isolation thermique se termine en amont du bord de pale arrière, est inférieure ou égale à 15 % de la longueur de corde (L) de la pale.

4. Aube de turbomachine selon la revendication 1, dans laquelle le bord de pale arrière (46) présente un rayon de bord arrière (r), **caractérisée en ce que** la distance (K), à laquelle la couche d'isolation thermique se termine en amont du bord arrière, est supérieure ou égale au quintuple du rayon de bord arrière (r).

5. Aube de turbomachine selon une des revendications 1 ou 4, dans laquelle le bord de pale arrière présente un rayon de bord arrière (r), **caractérisée en ce que** la distance (K), à laquelle la couche d'isolation thermique se termine en amont du bord arrière, est inférieure ou égale à l'octuple du rayon de bord arrière.

6. Aube de turbomachine selon l'une quelconque des revendications précédentes, **caractérisée en ce que** le contour de pale est formé par une paroi côté pression (48) et une paroi côté aspiration (47), dans laquelle une cavité (50) est enfermée entre la paroi côté pression et la paroi côté aspiration.

7. Aube de turbomachine selon la revendication 6, **caractérisée en ce que** des canaux pour la circulation d'un fluide de refroidissement, en particulier d'air de refroidissement, sont formés dans la cavité.

8. Aube de turbomachine selon une des revendications 6 ou 7, **caractérisée en ce que** des entretoises et/ou des nervures (52, 53, 54) sont disposées dans la cavité et relient la paroi côté pression et la paroi côté aspiration.

9. Aube de turbomachine selon la revendication 8, qui, vue du bord arrière (46) de la pale, présente une première entretoise (52) avec une première distance (f1) du bord de pale arrière, **caractérisée en ce que** la distance (K), à laquelle la couche d'isolation thermique se termine en amont du bord de pale arrière, considérée dans la direction de balayage du contour de pale, est supérieure ou égale à la première distance (f1).

10. Aube de turbomachine selon une des revendications 8 ou 9, qui, vue du bord arrière (46) de la pale, présente une deuxième entretoise (53) avec une deuxième distance (f2) du bord de pale arrière, **caractérisée en ce que** la distance (K), à laquelle la couche d'isolation thermique se termine en amont du bord de pale arrière, considérée dans la direction de balayage du contour de pale, est inférieure ou égale à la deuxième distance (f2).

11. Aube de turbomachine selon l'une quelconque des revendications précédentes, dans laquelle la région de transition de la pale à la plateforme d'aube présente un premier rayon de transition (r1) adjacent à la plate-forme d'aube, **caractérisée en ce que** la largeur (m1) de la région non couverte par la couche d'isolation thermique est supérieure ou égale au premier rayon de transition.

12. Aube de turbomachine selon l'une quelconque des revendications précédentes, dans laquelle l'aube de turbomachine présente une plate-forme de tête (31) dans la région en tête d'aube, **caractérisée en ce que** la pale est réalisée sans couche d'isolation thermique dans une région (44) adjacente à la plate-forme de tête.

13. Aube de turbomachine selon la revendication 12, dans laquelle la région de transition de la pale à la plate-forme d'aube présente un deuxième rayon de transition (r1) adjacent à la plate-forme de tête, **caractérisée en ce que** la largeur (m2) de la région non couverte par la couche d'isolation thermique est supérieure au deuxième rayon de transition.

14. Aube de turbomachine selon l'une quelconque des revendications précédentes, **caractérisée en ce que** la région de la pale non couverte par la couche d'isolation thermique est couverte par une couche de protection contre l'oxydation (49).

15. Aube de turbomachine selon la revendication 14, **caractérisée en ce que** la couche de protection contre l'oxydation recouvre tout le contour d'aube extérieur, et est disposée dans les régions couvertes par la couche d'isolation thermique comme couche d'accrochage entre le matériau de base de l'aube et la couche d'isolation thermique.

16. Procédé de fabrication d'une aube de turbomachine selon l'une quelconque des revendications précédentes, comprenant:
fabriquer un élément de base d'aube en un matériau de base, élément de base d'aube qui comprend une pale (4) avec un contour de pale extérieur, et déposer une couche d'isolation thermique (41) sur le côté extérieur de la pale (4), dans lequel la couche d'isolation thermique (41) ne recouvre de façon ciblée que des régions entièrement déterminées du contour extérieur de la pale, de telle manière qu'une région de bord arrière (42) de la pale (4) soit réalisée sans couche d'isolation thermique, dans lequel on dépose la couche d'isolation thermique (41) sur la pale (4), **caractérisé en ce que** la pale (4) est réalisée sans couche d'isolation thermique dans la région (43) adjacente à une plate-forme de pied d'aube (21).

17. Procédé selon la revendication 16, **caractérisé en ce que** l'on dépose une couche d'accrochage (49) sur tout le contour extérieur de la pale avant le dépôt de la couche d'isolation thermique (41).
